# EUROPEAN PATENT APPLICATION

(11) **EP 4 635 579 A1**
(43) Date of publication of application: **22.10.2025**
(21) Application number: 24207567.9
(22) Date of filing: 18.10.2024
(51) Int. Cl.: A62C 3/07, H01M 10/48, H01M 10/613, H01M 10/625, H01M 10/6567, H01M 50/233, H01M 50/249, H01M 50/271

(54) **BATTERY PACK HAVING FIRE EXTINGUISHING FUNCTION FOR ELECTRIC VEHICLE**

(30) Priority: 17.04.2024 KR 20240051081
(71) Applicant: HTC Co., Ltd, Ansan-si Gyeonggi-do 15421 (KR)
(72) Inventor: KWON, Jae Sung, 17003 Yongin-si, Gyeonggi-do (KR); PARK, Sang Ku, 14963 Siheung-si, Gyeonggi-do (KR); KIM, Byung Soo, 22535 Incheon (KR)
(74) Representative: Cabinet Chaillot

(57) **Abstract**

Proposed is a battery pack having a fire extinguishing function for an electric vehicle. The battery pack includes a plurality of battery modules having respective temperature detection sensors, a case accommodating the plurality of battery modules, a fire extinguishing fluid storage in which a predetermined amount of fire extinguishing fluid is stored with a predetermined supply pressure, and a supply mechanism configured to supply the fire extinguishing fluid in the fire extinguishing fluid storage, on the basis of information detected from the temperature detection sensors, to the battery module where a fire occurs or an abnormal symptom occurs. The case cover comprises: an outer shape part (211) configured such that a plurality of fire extinguishing fluid storing parts in the same number as the plurality of battery modules is respectively positioned on upper portions of the plurality of battery modules; and

a plurality of open-type nozzles formed on the outer shape part in a direction toward the plurality of battery modules such that the plurality of nozzles (215) is respectively in communication with the plurality of fire extinguishing fluid storing parts. The outer shape part comprises one upper plate (212) and a plurality of lower plates (214), the upper plate and the plurality of lower plates being welded with each other, thereby forming the plurality of fire extinguishing fluid storing parts having internal spaces with predetermined sizes.

## Description

### CROSS REFERENCE TO RELATED APPLICATION

The present application claims priority to Korean Patent Application No. 10-2024-0051081, filed April 17, 2024, the entire contents of which are incorporated herein for all purposes by this reference.

### BACKGROUND OF THE INVENTION

### Field of the Invention

The present disclosure relates to a battery pack having a fire extinguishing function for an electric vehicle. More particularly, the present disclosure relates to a battery pack having a fire extinguishing function for an electric vehicle, the battery pack being configured such that a fire extinguishing fluid stored in a fire extinguishing fluid storage is only sprayed to a corresponding battery module region where a fire occurs or an abnormal symptom occurs, thereby allowing the fire extinguishing fluid to rapidly cool a battery cell or to be absorbed inside the battery cell so that an internal thermal runaway phenomenon is suppressed and the internal thermal runaway phenomenon is prevented from propagating to adjacent cells.

### Description of the Related Art

Recently, an electric vehicle using a battery is rapidly increasing. Meanwhile, a battery fire often occurs, and the occurrence of a fire due to a spark, a short circuit, and so on is a situation in which the occurrence of the fire is almost impossible to predict. Therefore, preparation for a fire is required.

A battery for an electric vehicle is configured such that multiple battery modules to which a plurality of battery cells is connected are mounted, but there is a problem that a fire is rapidly propagated to other connected battery cells or battery modules even when the fire occurs in one battery cell.

Generally, a secondary battery is capable of being recharged and reused. Recently, a lithium-ion battery having high charging and discharging efficiency has been widely used. Since the lithium-ion battery has a relatively small volume and has high charging and discharging efficiency, the use of the lithium-ion battery is increasing not only for an electric vehicle and an ESS as described above, but also for a power plant, a charging station, and a mobile device.

However, in the lithium-ion battery, since a thin separator is mounted between a negative electrode material and a positive electrode material, the separator is damaged by impact, or a fire occurs when a short circuit occurs between the negative electrode material and the positive electrode material due to aging and the growth of dendrites. In a large-sized facility, there is a problem that significant financial damage occurs.

Meanwhile, in a battery pack including a battery module, air-cooled or water-cooled cooling technology is applied in order to maintain an appropriate cell temperature. However, when thermal runaway occurs in a battery cell, a proper temperature control is not capable of being performed. Furthermore, thermal runaway is propagated to adjacent cells, which may lead to a serious fire that ignites the entire battery.

Although there is substantial related art in which a separate fire extinguishing apparatus is provided inside a battery module or a battery pack so as to extinguish a fire due to thermal runaway of a battery cell, there is a limitation that a fire extinguishing fluid sufficient to extinguish a fire in the battery cell is not capable of being included due to space and structural limitations. In addition, the existing related art employs a structure in which a small amount of fire extinguishing fluid is sprayed at a specific position, so that the amount of fire extinguishing fluid is absolutely insufficient for extinguishing a fire in an actual battery. Furthermore, since the battery cells are in close contact with each other, the fire extinguishing fluid does not sufficiently contact the battery cell where a fire occurs, so that there is a problem that the fire is easily propagated to adjacent cells.

### SUMMARY OF THE INVENTION

Accordingly, the present disclosure has been made keeping in mind the above problems occurring in the related art, and an objective of the present disclosure is to provide a battery pack having a fire extinguishing function for an electric vehicle, the battery pack being configured such that a fire extinguishing fluid stored in a fire extinguishing fluid storage is only sprayed, on the basis of temperature information measured by a temperature detection sensor, to a corresponding battery module region where a fire occurs or an abnormal symptom occurs, thereby allowing the fire extinguishing fluid to rapidly cool a battery cell or to be absorbed inside the battery cell so that an internal thermal runaway phenomenon is suppressed and the internal thermal runaway phenomenon is prevented from propagating to adjacent cells.

In order to achieve the objective described above, according to the present disclosure, there is provided a battery pack having a fire extinguishing function for an electric vehicle, the battery pack including: a plurality of battery modules having respective temperature detection sensors; a case accommodating the plurality of battery modules; a fire extinguishing fluid storage in which a predetermined amount of fire extinguishing fluid is stored with a predetermined supply pressure; and a supply mechanism configured to supply the fire extinguishing fluid in the fire extinguishing fluid storage, on the basis of information detected from the temperature detection sensors, to a corresponding pipe among respective pipes and to supply the fire extinguishing fluid to the corresponding battery module where a fire occurs or an abnormal symptom occurs, wherein the case includes a case body and a case cover, wherein the case cover includes: an outer shape part configured such that a plurality of fire extinguishing fluid storing parts in the same number as the plurality of battery modules is respectively positioned on upper portions of the plurality of battery modules; and a plurality of open-type nozzles formed on the outer shape part in a direction toward the plurality of battery modules such that the plurality of nozzles is respectively in communication with the plurality of fire extinguishing fluid storing parts, wherein the outer shape part includes one upper plate and a plurality of lower plates, the upper plate and the plurality of lower plates being welded with each other, thereby forming the plurality of fire extinguishing fluid storing parts having internal spaces with predetermined sizes, and wherein the plurality of spray nozzles is mounted on each of the lower plates, and the pipes are respectively connected to the plurality of fire extinguishing fluid storing parts.

The upper plate may be provided with a plurality of internal spaces having predetermined sizes for forming the plurality of fire extinguishing fluid storing parts, the plurality of internal spaces being formed by press forming a plate having a predetermined size. Each of the lower plates may be provided with an internal space having a predetermined size, the internal space being formed by press forming a plate corresponding to a size of each of the fire extinguishing storing parts and being configured to form the internal spaces of the plurality of fire extinguishing fluid storing parts by being added to the internal spaces of the upper plate having the predetermined sizes. Border portions of the plurality of lower plates may be welded such that the upper plate and the plurality of lower plates are coupled to each other, thereby forming the plurality of fire extinguishing fluid storing parts.

The upper plate may be provided with a plurality of internal spaces having predetermined sizes for forming the plurality of fire extinguishing fluid storing parts, the plurality of internal spaces being formed by press forming a plate having a predetermined size. Each of the plurality of lower plates may be formed in a plate shape corresponding to a size of each of the plurality of fire extinguishing fluid storing parts. Border portions of the plurality of lower plates may be welded such that the upper plate and the plurality of lower plates are coupled to each other, thereby forming the plurality of fire extinguishing fluid storing parts.

It is preferable that at least one of the upper plate and the lower plates may be provided with a plurality of embossed parts formed such that the plurality of embossed parts protrudes inwardly so that end portions of the upper plate and the lower plates are in surface contact with each other in the fire extinguishing fluid storing parts when the upper plate and the lower plates are brought into close contact with each other.

The fire extinguishing fluid storage may be configured as an integral part of the case body, or may be configured by inserting and fixing a separate container in an accommodation space that is formed in a position adjacent to a border of the case body.

It is preferable that the fire extinguishing fluid uses a fire extinguishing agent having a characteristic value of an electric conductivity of 10 µS/cm or less and a surface tension of 30 dyne/cm or less.

It is preferable that the case body has an inner portion provided with a partition wall structure divided into a plurality of sections so that the plurality of battery modules is capable of being accommodated in respective separation spaces.

It is preferable that the inner side surface of the each of the fire extinguishing fluid storing parts has an embossed shape.

The supply mechanism include: a distributor connected to the fire extinguishing fluid storage; the plurality of pipes respectively connecting the plurality of fire extinguishing fluid storing parts to the distributor; a plurality of valves respectively mounted inside the distributor such that the fire extinguishing fluid is capable of being selectively supplied to the plurality of valves; and a controller configured to open the corresponding valve so that the fire extinguishing fluid is supplied to, on the basis of temperature information measured by each of the temperature detection sensors, the fire extinguishing fluid storing part where the corresponding battery module in which the fire occurs or the abnormal symptom occurs is positioned, thereby allowing the fire extinguishing fluid to be sprayed through the plurality of nozzles.

In the present disclosure, since the fire extinguishing fluid is only sprayed, on the basis of temperature information measured by the temperature detection sensor, to a corresponding battery module region where a fire occurs or an abnormal symptom occurs, the fire extinguishing fluid rapidly cools the battery cell or is absorbed inside the battery cell, so that an internal thermal runaway phenomenon is capable of being suppressed and the internal thermal runaway phenomenon is capable of being prevented from propagating to the adjacent cells.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 and FIG. 2 are a schematic view and a cross-sectional view illustrating a configuration relationship of a battery pack having a fire extinguishing function for an electric vehicle according to an embodiment of the present disclosure;
FIG. 3 is a perspective view illustrating a configuration relationship of a case body illustrated in FIG. 1;
FIG. 4 is a plan view illustrating a state in which a battery module is disposed within a partition wall of the case body illustrated in FIG. 3;
FIG. 5 and FIG. 6 are upper and lower perspective views illustrating a configuration relationship of a case cover illustrated in FIG. 1;
FIG. 7 and FIG. 8 are a cross-sectional perspective view and a side view illustrating the case cover illustrated in FIG. 5, with a portion of the case cover cut away; and
FIG. 9 is a conceptual view illustrating a configuration relationship of a supply mechanism illustrated in FIG. 1.

### DETAILED DESCRIPTION OF THE INVENTION

Hereinafter, embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. In addition, unless otherwise defined, the technical and scientific terms used have the meanings commonly understood by those of ordinary skill in the art to which the present disclosure pertains. In the following description and the accompanying drawings, explanations of well-known functions and configurations that may unnecessarily obscure the gist of the present disclosure are omitted. The attached drawings are provided by way of example to sufficiently convey the spirit of the present disclosure to those skilled in the art. Accordingly, the present disclosure is not limited to the drawings presented below and may be embodied in other forms. Furthermore, throughout the specification, the same reference numerals refer to the same components. It should be noted that like elements are indicated by like reference numerals throughout the drawings wherever possible.

A battery pack having a fire extinguishing function for an electric vehicle according to the present disclosure is configured to spray a fire extinguishing fluid stored in a fire extinguishing fluid storage only, on the basis of temperature information measured by a temperature detection sensor, to a corresponding battery module region where a fire occurs or an abnormal symptom occurs, thereby extinguishing the fire or preventing a fire in advance.

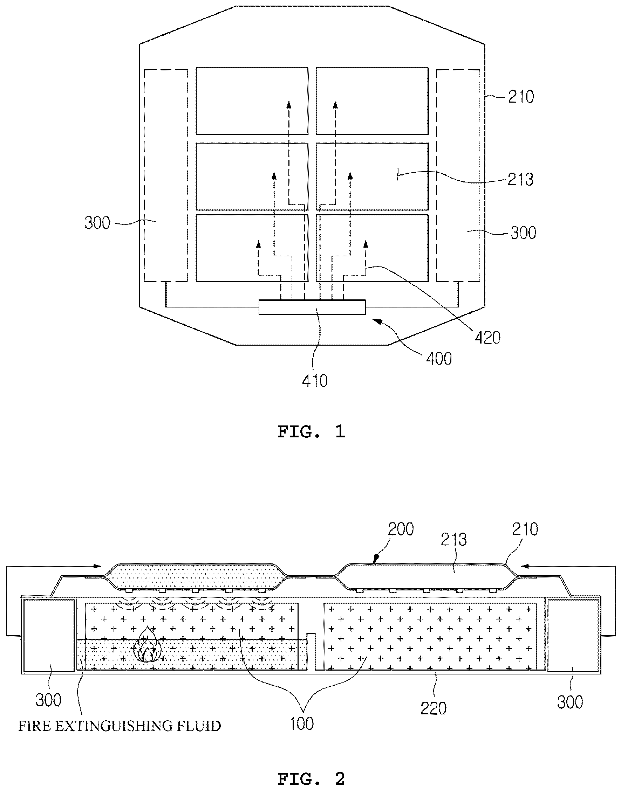

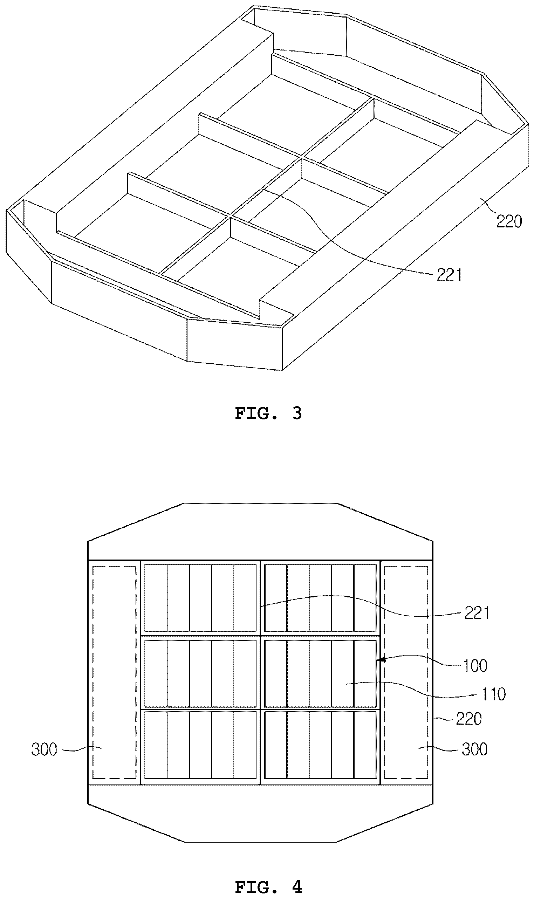

FIG. 1 and FIG. 2 are a schematic view and a cross-sectional view illustrating a configuration relationship of a battery pack having a fire extinguishing function for an electric vehicle according to an embodiment of the present disclosure, FIG. 3 is a perspective view illustrating a configuration relationship of a case body illustrated in FIG. 1, and FIG. 4 is a plan view illustrating a state in which a battery module is disposed within a partition wall of the case body illustrated in FIG. 3.

As illustrated in FIG. 1 to FIG. 4, the battery pack according to this embodiment includes a plurality of battery modules 100 respectively having temperature detection sensors (not illustrated), a case 200 accommodating the plurality of battery modules 100, a fire extinguishing fluid storage 300 disposed in the case 200 and configured to store a predetermined amount of fire extinguishing fluid with a predetermined supply pressure, and a supply mechanism 400 configured to supply, on the basis of information detected by the temperature detection sensor, the fire extinguishing fluid in the fire extinguishing fluid storage 300 to a battery module where a fire occurs or an abnormal symptom occurs.

The plurality of battery modules 100 are members configured to generate electrochemical energy by a movement of ions or electrons, and may be arranged inside the case 200. Here, the plurality of battery modules 100 may be arranged in a plurality of columns and rows inside the case 200 (see FIG 4). In addition, one battery module 100 may include a plurality of battery cells 110 stacked as illustrated in FIG. 4, and each of the battery cells 110 may include a positive electrode plate, a negative electrode plate, and a separator interposed between the positive electrode plate and the negative electrode plate. In addition, the battery module 100 may be provided with a protection circuit module that is provided in each battery cell 110, or a protection circuit module that is integrally connected to several battery cells 110. Furthermore, the protection circuit module may control a voltage or a current during charging and discharging of the battery cell 110. In addition, an electrode tab may be pulled out from each battery cell 110, and an electrode assembly may include all known forms such as a stacked form or a wound form.

The case 200 is a member that accommodates the plurality of battery modules 100 in the respective separation spaces, and may include a case body 220 and a case cover 210. Here, the case body 220 may accommodate the plurality of battery modules 100 therein, and may be formed in a box shape having an open first side. Furthermore, in order to accommodate the plurality of battery modules 100 in the respective separation spaces, the case body 220 may be configured such that the case body 220 has a partition wall structure divided into a plurality of sections (see FIG. 3 and FIG. 4). Therefore, the fire extinguishing fluid may be filled only in the separation space of the battery module 100 where a fire primarily occurs, so that the battery module 100 at this region may be fully or partially submerged (see FIG. 1). Meanwhile, a partition wall 221 of the case body 220 may have a height lower than a height of a border of the case body 220. In this situation, the fire extinguishing fluid may be primarily filled in the separation space of the battery module 100 where a fire occurs, thereby extinguishing the fire. Furthermore, when the fire extinguishing fluid overflows beyond the partition wall 221, the fire extinguishing fluid is filled in the separation space of the adjacent battery module 100, thereby being capable of performing a function for preventing flames and heat from propagating to adjacent cells.

The case cover 210 may open and close the open first side of the case body 220. Therefore, when the case cover 210 closes the case body 220, an inner portion of the case 200 may be protected from the external environment.

In addition, the case cover 210 is configured such that the case cover 210 simultaneously has a function for sealing the inner portion of the case body 220 and a fire extinguishing function for extinguishing or preventing a fire due to thermal runaway by spraying the fire extinguishing fluid stored in the fire extinguishing fluid storage 300 to a region of the corresponding battery module 100 where the fire occurs or an abnormal symptom occurs. That is, the case cover 210 is formed in a plate shape, and is configured to effectively extinguish a fire and to prevent the fire from propagating to the adjacent cells by intensively spraying a large amount of fire extinguishing fluid on a corresponding battery when an abnormal symptom or thermal runaway occurs on a specific cell or a module.

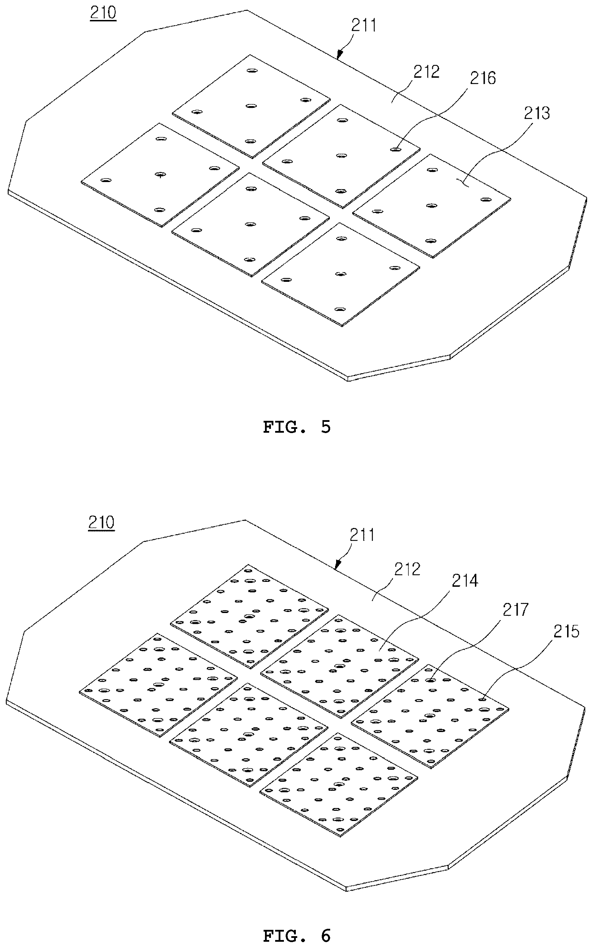

FIG. 5 and FIG. 6 are upper and lower perspective views illustrating a configuration relationship of a case cover illustrated in FIG. 1, and FIG. 7 and FIG. 8 are a cross-sectional perspective view and a side view illustrating the case cover illustrated in FIG. 5, with a portion of the case cover cut away.

As illustrated in FIG. 1 and FIG. 5 to FIG. 8, the case cover 210 includes an outer shape part 211 formed in a plate shape having a predetermined width such that a plurality of fire extinguishing fluid storing parts 213 equal to the number of the battery modules 100 is respectively positioned on upper portions of the battery modules 100, and includes a plurality of spray nozzles 215 formed on the outer shape part 211 in a direction toward the respective battery modules 100 such that the plurality of spray nozzles 215 is respectively in communication with the plurality of the fire extinguishing fluid storing parts 213.

The outer shape part 211 serves as a frame constituting the external appearance of the case cover 210, and includes an upper plate 212 and a plurality of lower plate 214, the upper plate 212 and the plurality of lower plates 214 being press formed so as to form the plurality of fire extinguishing fluid storing parts 213 divided and sectioned and being welded to each other along borders of the plurality of fire extinguishing fluid storing parts 213 so that the plurality of fire extinguishing fluid storing parts 213 having predetermined internal spaces therein is formed. The upper and lower plates 212 and 214 of this embodiment are formed of a metal material such as stainless steel or aluminum. Furthermore, in consideration of weight reduction and rigidity, it is preferable that the thickness of the upper and lower plates 212 and 214 is between 0.2 mm and 1.0 mm. Meanwhile, in consideration of the fire extinguishing fluid capacity, a structure of a vehicle, and weight, it is preferable that the overall thickness of the case cover 210 is between 3 mm and 10 mm.

Specifically, the upper plate 212 is configured such that the upper plate 212 is formed by press forming a plate having a predetermined size so as to have a shape having a plurality of internal spaces having predetermined sizes for forming the plurality of fire extinguishing fluid storing parts 213. Furthermore, the lower plate 214 is configured such that the lower plate 214 is formed by press forming a plate corresponding to a size of each of the fire extinguishing fluid storing parts 213 so as to form the internal space of each of the fire extinguishing fluid storing parts 213 by being added to the internal space of the upper plate 212, the internal space of the upper plate 212 having the predetermined size. In addition, the lower plate 214 has a plurality of holes perforated so that the plurality of nozzles 215 is respectively disposed and mounted therein. The plurality of lower plates 214 configured in this manner is disposed such that the plurality of lower plates 214 respectively covers the internal spaces of the upper plate 212, the internal spaces of the upper plate 212 having the predetermined sizes. Furthermore, border portions of the plurality of lower plates 214 are welded so that the upper plates 212 and the lower plates 214 are coupled to each other, thereby forming the plurality of fire extinguishing fluid storing parts 213.

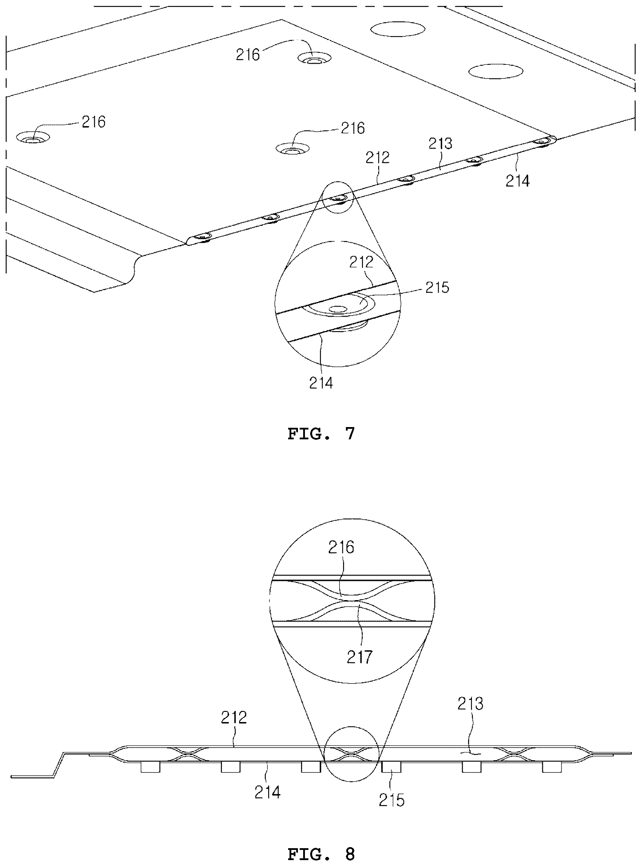

Meanwhile, when the upper and lower plates 212 and 214 are press formed in a flat manner, an inner upper surface and an inner lower surface of the fire extinguishing fluid storing part 213 have smooth and flat shapes. However, when the upper and lower plates 212 and 214 are press formed such that the upper and lower plates 212 and 214 have embossed shapes that protrude inwardly, a plurality of embossed parts 216 and 217 are respectively formed on the inner upper surface and the inner lower surface of the fire extinguishing fluid storing part 213 as illustrated in FIG. 7 and FIG. 8. Here, the upper and lower plates 212 and 214 are configured to respectively have the same embossed parts 216 and 217. Therefore, when the upper plate 212 and the lower plates 214 are brought into close contact with each other, end portions of the embossed parts 216 and 217 are in surface contact with each other. Therefore, the respective fire extinguishing fluid storing parts 213 are formed by welding the respective lower plates 214 to the upper plate 212 along the border portions of the respective lower plates 214. Furthermore, by welding the embossed parts 216 and 217 in close contact with each other, the rigidity of the fire extinguishing fluid storing part 213 preventing the expansion deformation due to the fire extinguishing fluid having high internal pressure is capable of being secured.

The outer shape part 211 may be formed by welding one sheet of upper plate and one sheet of lower plate with each other while the upper plate and the lower plate are brought into contact with each other, the upper plate and the lower plate being press formed so that the plurality of fire extinguishing fluid storing parts 213 is formed. However, when one sheet of upper plate and one sheet of lower plate are used, the overall weight of the outer shape part 211 is increased due to an unnecessary part that is not used for forming the fire extinguishing fluid storing parts 213. Furthermore, when a large-sized upper plate and a large-sized lower plate are welded with each other, a welding line is long and a welding area is increased, so that there is a disadvantage that the handling and workability during the manufacturing process are poor and the yield is decreased. Particularly, hundreds of spray nozzles are required to be welded to the lower plate, and there is a disadvantage that the entire lower plate is required to be discarded even when a welding failure of one spray nozzle occurs.

However, the outer shape part 211 of this embodiment is formed of one upper plate 212 having the shape same as the shape of one sheet of upper plate, and of the plurality of lower plates 214 in the same number as the fire extinguishing fluid storing parts 213. Therefore, the overall weight of the outer shape part 211 is reduced by removing an unnecessary part that is not used for forming the fire extinguishing fluid storing parts 213, and a general welding work for coupling the upper plate 212 and the lower plates 214 to each other by respectively welding the border portions of the plurality of lower plates 214 for forming the respective fire extinguishing fluid storing parts 213 is capable of being performed, so that the workability is capable of being increased. In addition, in a separate process, the spray nozzles 215 may be mounted on each of the lower plates 214 and a leakage test may be performed, and then the welding process in which each of the lower plates 214 is welded to the upper plate 212 may be performed, so that each of the lower plates 214 may be rapidly welded to the upper plate 212.

Meanwhile, in this embodiment, the upper plate and the lower plates 214 are respectively press formed for providing the space for forming the fire extinguishing fluid storing part 213. However, only the upper plate 212 may be press formed and the lower plates 214 may be provided as a flat plate without press forming. As such, when only the upper plate 212 is press formed, the internal space of the fire extinguishing fluid storing part 213 may be narrowed. In consideration of this situation, the internal space may be increased by deepening the press forming depth. In this situation, since only the upper plate 212 has the embossed parts 216, the embossed parts 216 are welded to the lower plates 214 while the embossed parts 216 are in close contact with the inner side surface of the lower plate 214, so that the rigidity of the fire extinguishing fluid storing part 213 preventing the expansion deformation due to the fire extinguishing fluid having the high internal pressure is capable of being secured.

The spray nozzles 215 are open-type nozzles facing the respective battery modules 100, and are respectively disposed and mounted in the holes formed in the lower plates 214 so that the spray nozzles 215 are respectively in communication with the fire extinguishing fluid storing parts 213.

Meanwhile, a hole may be formed in a state in which a portion of the lower plate 214 is further protrudes outwardly through a burring process when the lower plate 214 is press formed, and the hole may be used as the spray nozzle 215. That is, the spray nozzle 215 may be configured as an integral part of the lower plate 214 without mounting a separate plug for nozzle manufacturing, so that there is an effect that the manufacturing cost is reduced and the thickness of the lower plate 214 is reduced.

As illustrated in FIG. 1 and FIG. 2, the fire extinguishing fluid storage 300 stores the predetermined amount of fire extinguishing fluid at a predetermined discharge pressure and then supply the fire extinguishing fluid to a corresponding battery region where a fire occurs or an abnormal symptom occurs, and is connected to a first side of the corresponding fire extinguishing fluid storing part 213 of the case cover 210 through a pipe 420 via a distributor 410 that will be described later.

Meanwhile, the fire extinguishing fluid storage 300 is disposed adjacent to the border of the case body 220. Furthermore, the fire extinguishing fluid storage 300 may be configured as an integral part of the case body 220, or may be configured by inserting and fixing a separate container into an accommodation space formed in a position adjacent to the border of the case body 220. Considering a structure of the case 200 that will be disposed and fixed to an electric vehicle and the accommodation space of the plurality of battery modules 100 that will be accommodated inside the case body 220, it is preferable that the fire extinguishing fluid storage 300 is disposed such that the position adjacent to the border of the case body 220 is fully utilized. For example, the fire extinguishing fluid storage 300 may be disposed in borders of both sides of the case body 220.

The fire extinguishing fluid storage 300 has a structure in which the predetermined amount of fire extinguishing fluid is filled therein with the predetermined discharge pressure. At this time, in order to embed the fire extinguishing fluid such that the fire extinguishing fluid has the predetermined discharge pressure, an internal space of the container is filled with a pressurized gas (for example, 5 to 10 bar of nitrogen gas or carbon dioxide gas) that does not have a combustion reaction. Meanwhile, as the fire extinguishing fluid, a cooling extinguishing agent having insulation property and permeability may be used. Furthermore, it is preferable to use an extinguishing agent having characteristics of electrical conductivity of 10 µS/cm or less and surface tension of 30 dyne/cm or less on the basis of water having a high latent heat of evaporation. Here, when the electrical conductivity exceeds 10 µS/cm, an electric short circuit may occur at a battery terminal and a cell electrode, so that an additional thermal runaway reaction may occur. When the surface tension exceeds 30 dyne/cm, there is a disadvantage that the permeability and wetness are reduced, so that a cooling and fire extinguishing reaction to a core portion of a cell is delayed. Therefore, it is preferable to use an extinguishing agent that satisfies the condition described above.

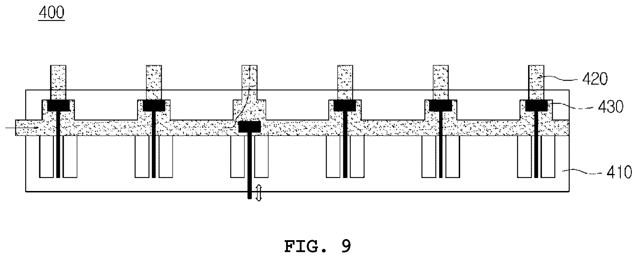

FIG. 9 is a conceptual view illustrating a configuration relationship of a supply mechanism illustrated in FIG. 1. As illustrated in FIG. 1 and FIG. 9, the supply mechanism 400 is configured to intensively supply the fire extinguishing fluid, on the basis of temperature information measured by the temperature detection sensor, stored in the fire extinguishing liquid storage 300 only to a region of the corresponding battery module 100 where a fire occurs or an abnormal symptom occurs. The supply mechanism 400 includes the distributor 410 connected to the fire extinguishing fluid storage 300, the plurality of pipes 420 respectively connecting the plurality of fire extinguishing fluid storing parts 213 to the distributor 410, a plurality of valves 430 respectively mounted inside the distributor 410 such that the fire extinguishing fluid is capable of being selectively supplied to the plurality of pipes 420, and a controller (not illustrated) configured to open the corresponding valve 430 so that the fire extinguishing fluid is supplied to, on the basis of temperature information measured by each of the temperature detection sensors, the fire extinguishing fluid storing part 213 where the corresponding battery module 100 in which a fire occurs or an abnormal symptom (such as exceeding the limit value of the battery usage temperature or exceeding the temperature increase rate per hour) occurs, thereby allowing the fire extinguishing fluid to be sprayed through the plurality of nozzles 215.

In this embodiment, since the fire extinguishing fluid storing part 213 of the case cover 210 is divided and sectioned into six units, six pipes 420 and six valves 430 are provided, but it is also possible to configure more or fewer units as required. Meanwhile, it is preferable that the valve 430 of this embodiment is an electronic solenoid valve.

Meanwhile, the battery pack in this embodiment is configured such that the battery pack is provided with a vent valve (not illustrated) on the case body 220, which is same as a general battery pack. Therefore, when a fire occurs in the battery, the vent valve is opened, so that the fire extinguishing fluid is capable of being smoothly sprayed without being affected by an internal pressure inside the case 200.

In the battery pack of this embodiment described above, the fire extinguishing fluid stored in the fire extinguishing fluid storage 300 is only sprayed, on the basis of temperature information measured from the temperature detection sensor, intensively to the region of the corresponding battery module 100 where a fire occurs or an abnormal symptom occurs, so that the battery is fully or partially submerged with the fire extinguishing fluid and the fire extinguishing fluid is absorbed inside the battery cell, thereby being capable of suppressing an internal thermal runaway phenomenon and also being capable of preventing the internal thermal runaway phenomenon from propagating to the adjacent cells. In addition, when the fire extinguishing fluid overflows beyond the partition wall 221 of the battery module 100 where the fire occurs, the separation space of the adjacent battery module 100 is also filled with the fire extinguishing fluid, thereby being capable of performing a function for preventing flames and heat from propagating to the adjacent cells.

The features of the battery pack having the fire extinguishing function for the electric vehicle of the present disclosure have been described above with reference to the accompanying drawings, but they are just preferable examples. Therefore, it is apparent to those skilled in the art that the present disclosure is not limited to the embodiments and may be modified in various ways without departing from the spirit and scope of the present disclosure, so it should be understood that those modifications and changes are included in claims of the present disclosure.

### INDUSTRIAL APPLICABILITY

The present disclosure is applied to an electric vehicle, and is used for extinguishing a fire when a fire occurs in a battery.

## Claims

1. A battery pack having a fire extinguishing function for an electric vehicle, the battery pack comprising:
a plurality of battery modules having respective temperature detection sensors;
a case accommodating the plurality of battery modules;
a fire extinguishing fluid storage in which a predetermined amount of fire extinguishing fluid is stored with a predetermined supply pressure; and
a supply mechanism configured to supply the fire extinguishing fluid in the fire extinguishing fluid storage, on the basis of information detected from the temperature detection sensors, to a corresponding pipe among respective pipes and to supply the fire extinguishing fluid to the corresponding battery module where a fire occurs or an abnormal symptom occurs,
wherein the case comprises a case body and a case cover,
wherein the case cover comprises:
an outer shape part configured such that a plurality of fire extinguishing fluid storing parts in the same number as the plurality of battery modules is respectively positioned on upper portions of the plurality of battery modules; and
a plurality of open-type nozzles formed on the outer shape part in a direction toward the plurality of battery modules such that the plurality of nozzles is respectively in communication with the plurality of fire extinguishing fluid storing parts,
wherein the outer shape part comprises one upper plate and a plurality of lower plates, the upper plate and the plurality of lower plates being welded with each other, thereby forming the plurality of fire extinguishing fluid storing parts having internal spaces with predetermined sizes,
wherein the plurality of spray nozzles is mounted on each of the lower plates, and the pipes are respectively connected to the plurality of fire extinguishing fluid storing parts, and
wherein at least one of the upper plate and the lower plates is provided with a plurality of embossed parts formed such that the plurality of embossed parts protrudes inwardly so that end portions of the upper plate and the lower plates are in surface contact with each other in the fire extinguishing fluid storing parts when the upper plate and the lower plates are brought into close contact with each other.

2. The battery pack of claim 1, wherein the fire extinguishing fluid storage is disposed adjacent to a border of the case body.

3. The battery pack of claim 2, wherein the fire extinguishing fluid storage is configured as an integral part of the case body, or is configured by inserting and fixing a separate container in an accommodation space that is formed in a position adjacent to a border of the case body.

4. The battery pack of claim 1, wherein the fire extinguishing fluid uses a fire extinguishing agent having a characteristic value of an electric conductivity of 10 µS/cm or less and a surface tension of 30 dyne/cm or less.

5. The battery pack of claim 1, wherein the case body has an inner portion provided with a partition wall structure divided into a plurality of sections so that the plurality of battery modules is capable of being accommodated in respective separation spaces.

6. The battery pack of claim 1, wherein the supply mechanism comprises:
a distributor connected to the fire extinguishing fluid storage;
the plurality of pipes respectively connecting the plurality of fire extinguishing fluid storing parts to the distributor;
a plurality of valves respectively mounted inside the distributor such that the fire extinguishing fluid is capable of being selectively supplied to the plurality of valves; and
a controller configured to open the corresponding valve so that the fire extinguishing fluid is supplied to, on the basis of temperature information measured by each of the temperature detection sensors, the fire extinguishing fluid storing part where the corresponding battery module in which the fire occurs or the abnormal symptom occurs is positioned, thereby allowing the fire extinguishing fluid to be sprayed through the plurality of nozzles.

7. A battery pack having a fire extinguishing function for an electric vehicle, the battery pack comprising:
a plurality of battery modules having respective temperature detection sensors;
a case accommodating the plurality of battery modules;
a fire extinguishing fluid storage in which a predetermined amount of fire extinguishing fluid is stored with a predetermined supply pressure; and
a supply mechanism configured to supply the fire extinguishing fluid in the fire extinguishing fluid storage, on the basis of information detected from the temperature detection sensors, to a corresponding pipe among respective pipes and to supply the fire extinguishing fluid to the corresponding battery module where a fire occurs or an abnormal symptom occurs,
wherein the case comprises a case body and a case cover,
wherein the case cover comprises:
an outer shape part configured such that a plurality of fire extinguishing fluid storing parts in the same number as the plurality of battery modules is respectively positioned on upper portions of the plurality of battery modules; and
a plurality of open-type nozzles formed on the outer shape part in a direction toward the plurality of battery modules such that the plurality of nozzles is respectively in communication with the plurality of fire extinguishing fluid storing parts,
wherein the outer shape part comprises one upper plate and a plurality of lower plates, the upper plate and the plurality of lower plates being welded with each other, thereby forming the plurality of fire extinguishing fluid storing parts having internal spaces with predetermined sizes,
wherein the plurality of spray nozzles is mounted on each of the lower plates, and the pipes are respectively connected to the plurality of fire extinguishing fluid storing parts,
wherein the upper plate is provided with a plurality of internal spaces having predetermined sizes for forming the plurality of fire extinguishing fluid storing parts, the plurality of internal spaces being formed by press forming a plate having a predetermined size,
wherein each of the lower plates is provided with an internal space having a predetermined size, the internal space being formed by press forming a plate corresponding to a size of each of the fire extinguishing storing parts and being configured to form the internal spaces of the plurality of fire extinguishing fluid storing parts by being added to the internal spaces of the upper plate having the predetermined sizes, and
wherein border portions of the plurality of lower plates are welded such that the upper plate and the plurality of lower plates are coupled to each other, thereby forming the plurality of fire extinguishing fluid storing parts.

8. The battery pack of claim 7, wherein the fire extinguishing fluid storage is disposed adjacent to a border of the case body.

9. The battery pack of claim 8, wherein the fire extinguishing fluid storage is configured as an integral part of the case body, or is configured by inserting and fixing a separate container in an accommodation space that is formed in a position adjacent to a border of the case body.

10. The battery pack of claim 7, wherein the fire extinguishing fluid uses a fire extinguishing agent having a characteristic value of an electric conductivity of 10 µS/cm or less and a surface tension of 30 dyne/cm or less.

11. The battery pack of claim 7, wherein the case body has an inner portion provided with a partition wall structure divided into a plurality of sections so that the plurality of battery modules is capable of being accommodated in respective separation spaces.

12. The battery pack of claim 7, wherein the supply mechanism comprises:
a distributor connected to the fire extinguishing fluid storage;
the plurality of pipes respectively connecting the plurality of fire extinguishing fluid storing parts to the distributor;
a plurality of valves respectively mounted inside the distributor such that the fire extinguishing fluid is capable of being selectively supplied to the plurality of valves; and
a controller configured to open the corresponding valve so that the fire extinguishing fluid is supplied to, on the basis of temperature information measured by each of the temperature detection sensors, the fire extinguishing fluid storing part where the corresponding battery module in which the fire occurs or the abnormal symptom occurs is positioned, thereby allowing the fire extinguishing fluid to be sprayed through the plurality of nozzles.

13. A battery pack having a fire extinguishing function for an electric vehicle, the battery pack comprising:
a plurality of battery modules having respective temperature detection sensors;
a case accommodating the plurality of battery modules;
a fire extinguishing fluid storage in which a predetermined amount of fire extinguishing fluid is stored with a predetermined supply pressure; and
a supply mechanism configured to supply the fire extinguishing fluid in the fire extinguishing fluid storage, on the basis of information detected from the temperature detection sensors, to a corresponding pipe among respective pipes and to supply the fire extinguishing fluid to the corresponding battery module where a fire occurs or an abnormal symptom occurs,
wherein the case comprises a case body and a case cover,
wherein the case cover comprises:
an outer shape part configured such that a plurality of fire extinguishing fluid storing parts in the same number as the plurality of battery modules is respectively positioned on upper portions of the plurality of battery modules; and
a plurality of open-type nozzles formed on the outer shape part in a direction toward the plurality of battery modules such that the plurality of nozzles is respectively in communication with the plurality of fire extinguishing fluid storing parts,
wherein the outer shape part comprises one upper plate and a plurality of lower plates, the upper plate and the plurality of lower plates being welded with each other, thereby forming the plurality of fire extinguishing fluid storing parts having internal spaces with predetermined sizes,
wherein the plurality of spray nozzles is mounted on each of the lower plates, and the pipes are respectively connected to the plurality of fire extinguishing fluid storing parts,
wherein the upper plate is provided with a plurality of internal spaces having predetermined sizes for forming the plurality of fire extinguishing fluid storing parts, the plurality of internal spaces being formed by press forming a plate having a predetermined size,
wherein each of the plurality of lower plates is formed in a plate shape corresponding to a size of each of the plurality of fire extinguishing fluid storing parts, and
wherein border portions of the plurality of lower plates are welded such that the upper plate and the plurality of lower plates are coupled to each other, thereby forming the plurality of fire extinguishing fluid storing parts.

14. The battery pack of claim 13, wherein the fire extinguishing fluid storage is disposed adjacent to a border of the case body.

15. The battery pack of claim 14, wherein the fire extinguishing fluid storage is configured as an integral part of the case body, or is configured by inserting and fixing a separate container in an accommodation space that is formed in a position adjacent to a border of the case body.

16. The battery pack of claim 13, wherein the fire extinguishing fluid uses a fire extinguishing agent having a characteristic value of an electric conductivity of 10 µS/cm or less and a surface tension of 30 dyne/cm or less.

17. The battery pack of claim 13, wherein the case body has an inner portion provided with a partition wall structure divided into a plurality of sections so that the plurality of battery modules is capable of being accommodated in respective separation spaces.

18. The battery pack of claim 13, wherein the supply mechanism comprises:
a distributor connected to the fire extinguishing fluid storage;
the plurality of pipes respectively connecting the plurality of fire extinguishing fluid storing parts to the distributor;
a plurality of valves respectively mounted inside the distributor such that the fire extinguishing fluid is capable of being selectively supplied to the plurality of valves; and
a controller configured to open the corresponding valve so that the fire extinguishing fluid is supplied to, on the basis of temperature information measured by each of the temperature detection sensors, the fire extinguishing fluid storing part where the corresponding battery module in which the fire occurs or the abnormal symptom occurs is positioned, thereby allowing the fire extinguishing fluid to be sprayed through the plurality of nozzles.

## Amended claims

### Amended claims in accordance with Rule 137(2) EPC.

1. A battery pack having a fire extinguishing function for an electric vehicle, the battery pack comprising:
a plurality of battery modules (100) having respective temperature detection sensors;
a case (200) accommodating the plurality of battery modules (100) and comprising a case body (220) and a case cover (210);
a fire extinguishing fluid storage (300) in which a predetermined amount of fire extinguishing fluid is stored with a predetermined supply pressure; and
a supply mechanism (400) configured to supply the fire extinguishing fluid in the fire extinguishing fluid storage (300), on the basis of information detected from the temperature detection sensors, to a corresponding pipe among respective pipes (420) and to supply the fire extinguishing fluid to the corresponding battery module where a fire occurs or an abnormal symptom occurs,
**characterized in that** the case cover (210) comprises:
an outer shape part (211) configured such that a plurality of fire extinguishing fluid storing parts (213) in the same number as the plurality of battery modules (100) is respectively positioned on upper portions of the plurality of battery modules (100); and
a plurality of spray nozzles (215) formed on the outer shape part (211) in a direction toward the plurality of battery modules (100) and configured as open-type such that the plurality of spray nozzles (215) is respectively in communication with the plurality of fire extinguishing fluid storing parts (213),
wherein the outer shape part (211) comprises one upper plate (212) and a plurality of lower plates (214), the upper plate (212) and the plurality of lower plates (214) being welded with each other, thereby forming the plurality of fire extinguishing fluid storing parts (213) having internal spaces with predetermined sizes,
wherein the plurality of spray nozzles (215) is mounted on each of the lower plates (214), and the pipes (420) are respectively connected to the plurality of fire extinguishing fluid storing parts (213), and
wherein at least one of the upper plate (212) and the lower plates (214) is provided with a plurality of embossed parts (216) or 217) formed such that the plurality of embossed parts (216) or 217) protrudes inwardly so that end portions of the upper plate (212) and the lower plates (214) are in surface contact with each other in the fire extinguishing fluid storing parts (213) when the upper plate (212) and the lower plates (214) are brought into close contact with each other.

2. The battery pack of claim 1, wherein the fire extinguishing fluid storage (300) is disposed adjacent to a border of the case body (220).

3. The battery pack of claim 2, wherein the fire extinguishing fluid storage (300) is configured as an integral part of the case body (200), or is configured by inserting and fixing a separate container in an accommodation space that is formed in a position adjacent to a border of the case body (220).

4. The battery pack of claim 1, wherein the fire extinguishing fluid uses a fire extinguishing agent having a characteristic value of an electric conductivity of 10 µS/cm or less and a surface tension of 30 dyne/cm or less.

5. The battery pack of claim 1, wherein the case body has an inner portion provided with a partition wall structure divided into a plurality of sections so that the plurality of battery modules (100) is capable of being accommodated in respective separation spaces.

6. The battery pack of claim 1, wherein the supply mechanism (400) comprises:
a distributor (410) connected to the fire extinguishing fluid storage (300);
a plurality of pipes (420) respectively connecting the plurality of fire extinguishing fluid storing parts (213) to the distributor (410);
a plurality of valves (430) respectively mounted inside the distributor (410) such that the fire extinguishing fluid is capable of being selectively supplied to the plurality of valves (430); and
a controller configured to open the corresponding valve so that the fire extinguishing fluid is supplied to, on the basis of temperature information measured by each of the temperature detection sensors, the fire extinguishing fluid storing part where the corresponding battery module in which the fire occurs or the abnormal symptom occurs is positioned, thereby allowing the fire extinguishing fluid to be sprayed through the plurality of spray nozzles (215).

7. A battery pack having a fire extinguishing function for an electric vehicle, the battery pack comprising:
a plurality of battery modules (100) having respective temperature detection sensors;
a case (200) accommodating the plurality of battery modules and comprising a case body (220) and a case cover (210);
a fire extinguishing fluid storage (300) in which a predetermined amount of fire extinguishing fluid is stored with a predetermined supply pressure; and
a supply mechanism (400) configured to supply the fire extinguishing fluid in the fire extinguishing fluid storage (300), on the basis of information detected from the temperature detection sensors, to a corresponding pipe among respective pipes (420) and to supply the fire extinguishing fluid to the corresponding battery module where a fire occurs or an abnormal symptom occurs,
**characterized in that** the case cover (210) comprises:
an outer shape part (211) configured such that a plurality of fire extinguishing fluid storing parts (213) in the same number as the plurality of battery modules (100) is respectively positioned on upper portions of the plurality of battery modules (100); and
a plurality of spray nozzles (215) formed on the outer shape part (211) in a direction toward the plurality of battery modules (100) and configured as open-type such that the plurality of spray nozzles (215) is respectively in communication with the plurality of fire extinguishing fluid storing parts (213),
wherein the outer shape part (211) comprises one upper plate (212) and a plurality of lower plates (214), the upper plate (212) and the plurality of lower plates (214) being welded with each other, thereby forming the plurality of fire extinguishing fluid storing parts (213) having internal spaces with predetermined sizes,
wherein the plurality of spray nozzles (215) is mounted on each of the lower plates (214), and the pipes (420) are respectively connected to the plurality of fire extinguishing fluid storing parts (213),
wherein the upper plate (212) is provided with a plurality of internal spaces having predetermined sizes for forming the plurality of fire extinguishing fluid storing parts (213), the plurality of internal spaces being formed by press forming a plate having a predetermined size,
wherein each of the lower plates (214) is provided with an internal space having a predetermined size, the internal space being formed by press forming a plate corresponding to a size of each of the fire extinguishing storing parts and being configured to form the internal spaces of the plurality of fire extinguishing fluid storing parts (213) by being added to the internal spaces of the upper plate (212) having the predetermined sizes, and
wherein border portions of the plurality of lower plates are welded such that the upper plate (212) and the plurality of lower plates (214) are coupled to each other, thereby forming the plurality of fire extinguishing fluid storing parts (213).

8. The battery pack of claim 7, wherein the fire extinguishing fluid storage (300) is disposed adjacent to a border of the case body (220).

9. The battery pack of claim 8, wherein the fire extinguishing fluid storage (100) is configured as an integral part of the case body (220), or is configured by inserting and fixing a separate container in an accommodation space that is formed in a position adjacent to a border of the case body (220).

10. The battery pack of claim 7, wherein the fire extinguishing fluid uses a fire extinguishing agent having a characteristic value of an electric conductivity of 10 µS/cm or less and a surface tension of 30 dyne/cm or less.

11. The battery pack of claim 7, wherein the case body (220) has an inner portion provided with a partition wall structure divided into a plurality of sections so that the plurality of battery modules (100) is capable of being accommodated in respective separation spaces.

12. The battery pack of claim 7, wherein the supply mechanism (400) comprises:
a distributor (410) connected to the fire extinguishing fluid storage (300);
a plurality of pipes (420) respectively connecting the plurality of fire extinguishing fluid storing parts (213) to the distributor (410);
a plurality of valves (430) respectively mounted inside the distributor (410) such that the fire extinguishing fluid is capable of being selectively supplied to the plurality of valves (430); and
a controller configured to open the corresponding valve so that the fire extinguishing fluid is supplied to, on the basis of temperature information measured by each of the temperature detection sensors, the fire extinguishing fluid storing part where the corresponding battery module in which the fire occurs or the abnormal symptom occurs is positioned, thereby allowing the fire extinguishing fluid to be sprayed through the plurality of spray nozzles (215).

13. A battery pack having a fire extinguishing function for an electric vehicle, the battery pack comprising:
a plurality of battery modules (100) having respective temperature detection sensors;
a case (200) accommodating the plurality of battery modules (100) and comprising a case body (220) and a case cover (210);
a fire extinguishing fluid storage (300) in which a predetermined amount of fire extinguishing fluid is stored with a predetermined supply pressure; and
a supply mechanism (400) configured to supply the fire extinguishing fluid in the fire extinguishing fluid storage (300), on the basis of information detected from the temperature detection sensors, to a corresponding pipe among respective pipes (420) and to supply the fire extinguishing fluid to the corresponding battery module where a fire occurs or an abnormal symptom occurs,
**characterized in that** the case cover (210) comprises:
an outer shape part (211) configured such that a plurality of fire extinguishing fluid storing parts (213) in the same number as the plurality of battery modules (100) is respectively positioned on upper portions of the plurality of battery modules (100); and
a plurality of spray nozzles (215) formed on the outer shape part (211) in a direction toward the plurality of battery modules (100) and configured as open-type such that the plurality of spray nozzles (215) is respectively in communication with the plurality of fire extinguishing fluid storing parts (213),
wherein the outer shape part (211) comprises one upper plate (212) and a plurality of lower plates (214), the upper plate (212) and the plurality of lower plates (214) being welded with each other, thereby forming the plurality of fire extinguishing fluid storing parts (213) having internal spaces with predetermined sizes,
wherein the plurality of spray nozzles (215) is mounted on each of the lower plates (214), and the pipes (420) are respectively connected to the plurality of fire extinguishing fluid storing parts (213),
wherein the upper plate (212) is provided with a plurality of internal spaces having predetermined sizes for forming the plurality of fire extinguishing fluid storing parts (213), the plurality of internal spaces being formed by press forming a plate having a predetermined size,
wherein each of the plurality of lower plates (214) is formed in a plate shape corresponding to a size of each of the plurality of fire extinguishing fluid storing parts (213), and
wherein border portions of the plurality of lower plates (214) are welded such that the upper plate (212) and the plurality of lower plates (214) are coupled to each other, thereby forming the plurality of fire extinguishing fluid storing parts (213).

14. The battery pack of claim 13, wherein the fire extinguishing fluid storage (300) is disposed adjacent to a border of the case body (220).

15. The battery pack of claim 14, wherein the fire extinguishing fluid storage (300) is configured as an integral part of the case body (220), or is configured by inserting and fixing a separate container in an accommodation space that is formed in a position adjacent to a border of the case body (220).

16. The battery pack of claim 13, wherein the fire extinguishing fluid uses a fire extinguishing agent having a characteristic value of an electric conductivity of 10 µS/cm or less and a surface tension of 30 dyne/cm or less.

17. The battery pack of claim 13, wherein the case body (220) has an inner portion provided with a partition wall structure divided into a plurality of sections so that the plurality of battery modules (100) is capable of being accommodated in respective separation spaces.

18. The battery pack of claim 13, wherein the supply mechanism (400) comprises:
a distributor (410) connected to the fire extinguishing fluid storage (300);
a plurality of pipes (420) respectively connecting the plurality of fire extinguishing fluid storing parts (213) to the distributor (410);
a plurality of valves (430) respectively mounted inside the distributor (410) such that the fire extinguishing fluid is capable of being selectively supplied to the plurality of valves (430); and
a controller configured to open the corresponding valve so that the fire extinguishing fluid is supplied to, on the basis of temperature information measured by each of the temperature detection sensors, the fire extinguishing fluid storing part where the corresponding battery module in which the fire occurs or the abnormal symptom occurs is positioned, thereby allowing the fire extinguishing fluid to be sprayed through the plurality of spray nozzles (215).
